# EUROPÄISCHE PATENTSCHRIFT

(11) **EP 2 161 098 B1**
(45) Veröffentlichungstag und Bekanntmachung des Hinweises auf die Patenterteilung: **24.10.2012**
(21) Anmeldenummer: 08405220.8
(22) Anmeldetag: 09.09.2008
(51) Int. Cl.: B23Q 39/04, B23C 3/32, B23C 3/34

(54) **Fräsmaschine**
Milling machine
Fraiseuse

(43) Veröffentlichungstag der Anmeldung: 10.03.2010
(73) Patentinhaber: New Wyssbrod Technology AG, 8640 Rapperswil-Jona (CH)
(72) Erfinder: Büttler, Urs, 2540 Grenchen (CH); Walter, Simon, 2552 Orpund (CH)
(74) Vertreter: Rentsch Partner AG

(56) Entgegenhaltungen:
- EP-A- 1 695 791
- DE-C- 367 740
- US-A- 1 972 818
- US-A- 2 808 764
- US-A- 3 168 001

## Beschreibung

### Technisches Gebiet

Die Erfindung betrifft eine Fräsmaschine für die spanabhebende Umfangbearbeitung von drei Werkstücken gleichzeitig, mit einem 3-fach-Fräskopf mit drei parallel zueinander stehenden Fräserspindelachsen, einem 3-fach-Reitstock und einem 3-fach-Werkstückspindelstock mit drei in einer ersten horizontalen Hauptachsenrichtung parallel zueinander stehenden Werkstückspindelachsen.

### Stand der Technik

Unter der Bezeichnung CNC 7-4A ist ein 3-spindliger Produktionsfräsautomat der Firma Wyssbrod Technologie AG für die spanabhebende Umfangbearbeitung von drei Werkstücken gleichzeitig bekannt. Die drei Fräserspindeln weisen einen festen Abstand zueinander auf und sind über ein Getriebe mit einer zentralen Antriebseinheit verbunden.

Hochpräzise wellenförmige Werkstücke wie Zahnräder und Schnecken von Getrieben lassen sich auf den bekannten 3-spindligen Fräsmaschinen nicht innerhalb der geforderten Toleranzen fertigen. Das Fräsen von hochpräzisen Zahnrad- und Schneckengeometrien, die auf Drehteilrohlinge erfolgte deshalb bis anhin auf 1-spindligen Fräsmaschinen unter Inkaufnahme einer entsprechend verringerten Produktionsleistung.

### Darstellung der Erfindung

Der Erfindung liegt die Aufgabe zugrunde, eine Fräsmaschine der eingangs genannten Art bereitzustellen, mit welcher auch hochpräzise Zahnrad- und Schneckengeometrien gefräst werden können.

Zur erfindungsgemässen Lösung der Aufgabe führt, dass der 3-fach-Reitstock und der 3-fach-Werkstückspindelstock auf einem in einer zweiten horizontalen Hauptachsenrichtung rechtwinklig zur ersten horizontalen Hauptachsenrichtung längs einer horizontalen Verschiebeachse verschiebbaren Schlitten angeordnet sind und der 3-fach-Fräskopf drei Fräskopfeinheiten aufweist, wobei zwei Fräskopfeinheiten relativ zur dritten Fräskopfeinheit in der zweiten horizontalen Hauptachsenrichtung längs horizontalen Verschiebeachsen verschiebbar sind.

Die erfindungsgemässe Feineinstellung ermöglicht eine Korrektur unterschiedlicher Fräsdurchmesser und Steigungsfehler pro Fräswerkzeug und pro Fräserspindel zur Werkstückachse. Auch eine Korrektur der Zylindrizität pro Fräserspindel ist möglich. Damit können gleichzeitig drei Werkstücke mit hoher Präzision bezüglich Zylindrizität und Profil gefräst werden. Die Teile-Ausbringung kann um einen Faktor 2 bis 3 erhöht werden.

Die Feineinstellung lässt sich noch präziser gestalten, wenn von den an den drei Fräskopfeinheiten montierten Fräserwerkzeugen zwei Fräserwerkzeuge relativ zum dritten, vorzugsweise mittleren, Fräserwerkzeug in Richtung der Fräserspindelachsen längs axialen Verschiebeachsen verschiebbar sind.

Bevorzugt sind die drei Fräskopfeinheiten auf einer gemeinsamen Fräskopfhalterung montiert, wobei eine der Fräskopfeinheiten, vorzugsweise die mittlere Fräskopfeinheit, fest mit der Fräskopfhalterung verbunden ist.

Bei einer zweckmässigen Ausführungsform sind zwei Fräskopfeinheiten, vorzugsweise die beiden äusseren Fräskopfeinheiten, auf je einem auf der Fräskopfhalterung längs der horizontalen Verschiebeachsen verschiebbaren Schlitten festgelegt.

Zum Verschieben der Schlitten weist eine an der Fräskopfhalterung befestigte Verschiebeeinrichtung zwei Stellantriebe auf. Die Stellantriebe können beispielsweise über Zahnriemen mit an den Schlitten festliegenden Kugelumlaufspindeln wirkverbunden sein.

Die drei Fräskopfeinheiten sind bevorzugt mit je einem Hauptspindelantrieb ausgestattet.

Bevorzugt ist der 3-fach-Fräskopf mit den drei Fräskopfeinheiten um eine in der zweiten horizontalen Hauptachsenrichtung liegende Fräskopfschwenkachse schwenkbar an einem in einer vertikalen Hauptachsenrichtung längs einer vertikalen Verschiebeachse verschiebbaren Vertikalschlitten festgelegt.

### Kurze Beschreibung der Zeichnung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1: eine Schrägsicht auf eine Anlage mit einer Wälzfräsmaschine zum Fräsen von Verzahnungen;
- Fig. 2: eine perspektivische Ansicht der Wälzfräsmaschine der Anlage von Fig.1;
- Fig. 3: einen Teil der Wälzfräsmaschine von Fig. 2 in vergrösserter Darstellung;
- Fig. 4: eine Variante der Wälzfräsmaschine von Fig. 3 zum Fräsen von Schnecken.

### Beschreibung von Ausführungsbeispielen

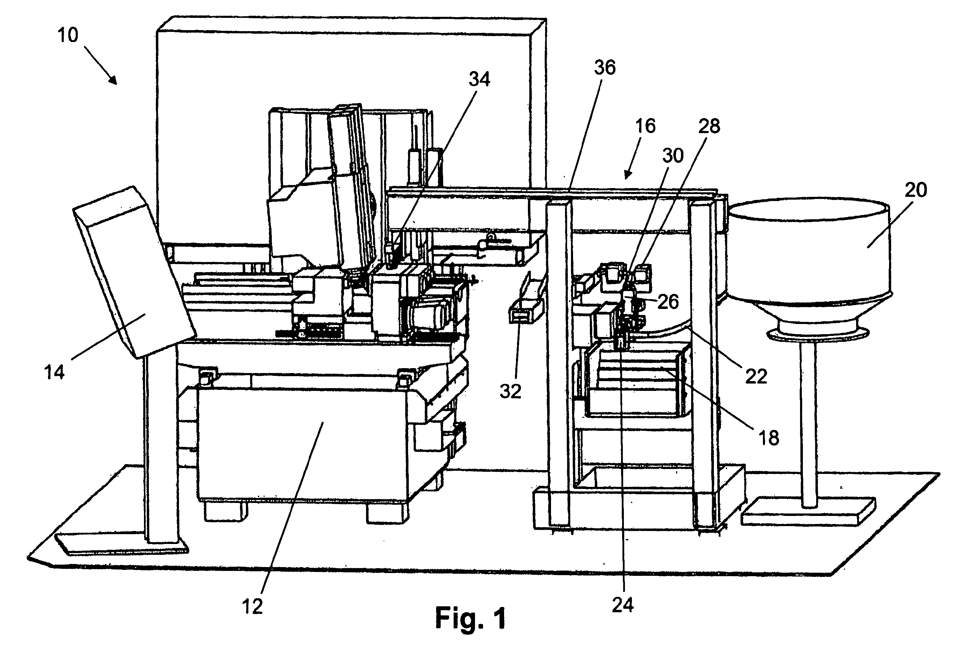

Eine in Fig. 1 dargestellte Anlage 10 zum gleichzeitigen Fräsen von drei Verzahnungen an drei Werkstücken in Form von Drehteilen weist als wesentliche Bestandteile eine im Betrieb von einer Maschinenverkleidung abgedeckte dreispindlige Wälzfräsmaschine 12 und ein Portallader oder Handling-Modul 16 mit einem 3-Achsen-Handling für das gleichzeitige Auswechseln von zwei mal drei Werkstücken auf. Die Bedienung der mit einer CNC-Steuerung ausgestatteten Anlage erfolgt über eine Bedienungskonsole 14 mit LCD-Farbbildschirm.

Die Zuführung von zu bearbeitenden Werkstücken 30, d.h. von Drehteilrohlingen, erfolgt entweder über ein Stapel-, Ketten- oder Schienenmagazin 18 oder über einen mit einem Schlauchabgang 22 ausgestatteten Vibrator 20. Bei Verwendung eines Stapel-, Ketten- oder Schienenmagazins 18 erfolgt die Vereinzelung der Drehteilrohlinge aus dem Stapel-, Ketten- oder Schienenmagazin 18 auf einen vertikal verfahrbaren Ausheber 24. Wird ein Vibrators mit Schlauchabgang verwendet, erfolgt die Vereinzelung von drei Drehteilrohlingen direkt auf den Ausheber 24.

Mittels eines mit einem Greifer versehenen Umsetzarms 26 wird nach Hochfahren des Aushebers 24 jedes Rohteil einzeln zur Durchmesserkotrolle auf eine Messstation 28 umgesetzt. Drehteilrohlinge, deren Durchmesser ausserhalb vorgegebener Toleranzgrenzen liegt, werden ausgesondert und einer Ausschleusschublade 32 zugeführt.

Das mit einem 2x3-fach-Greifer 34 ausgestattete Handling-Modul 16 entnimmt der Messstation 28 nacheinander drei Drehteilrohlinge und fährt mit diesen in einen Warteraum der Fräsmaschine 12. Nach dem gleichzeitigen Austrag von jeweils drei Fertigteilen mittels des bereits mit drei Drehteilrohlingen beladenen 2x3-fach-Greifers 34 aus dem Fräsbereich werden die Drehteilrohlinge für den Fräsvorgang in der Fräsmaschine 12 positioniert. Die drei Fertigteile werden anschliessend in Nachfolgeoperationen einer 3-fach-Fertigteil-Umsetzstation übergeben oder auf eine kundenspezifische Ablage gelegt.

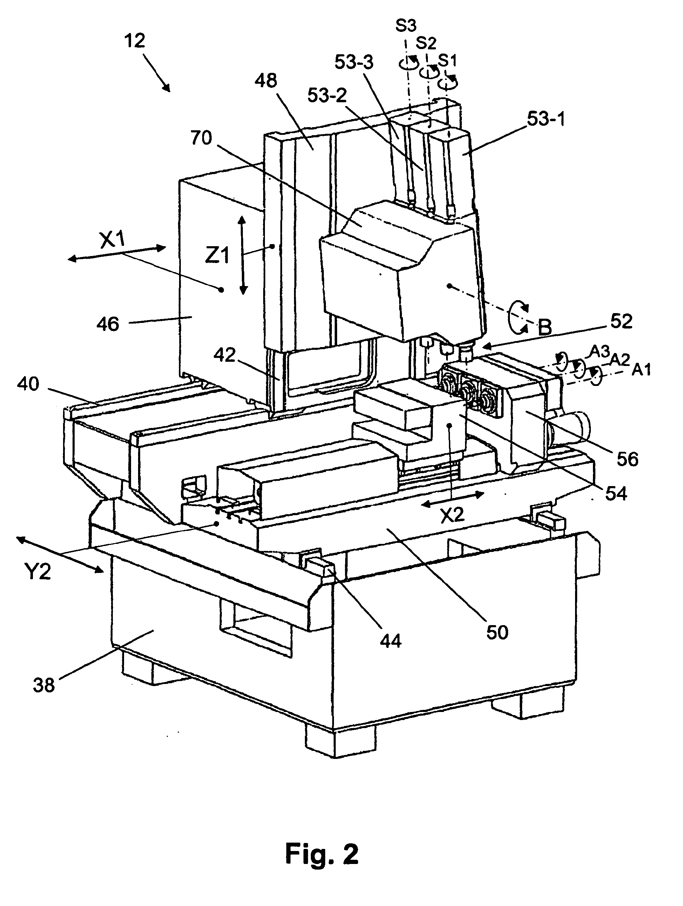

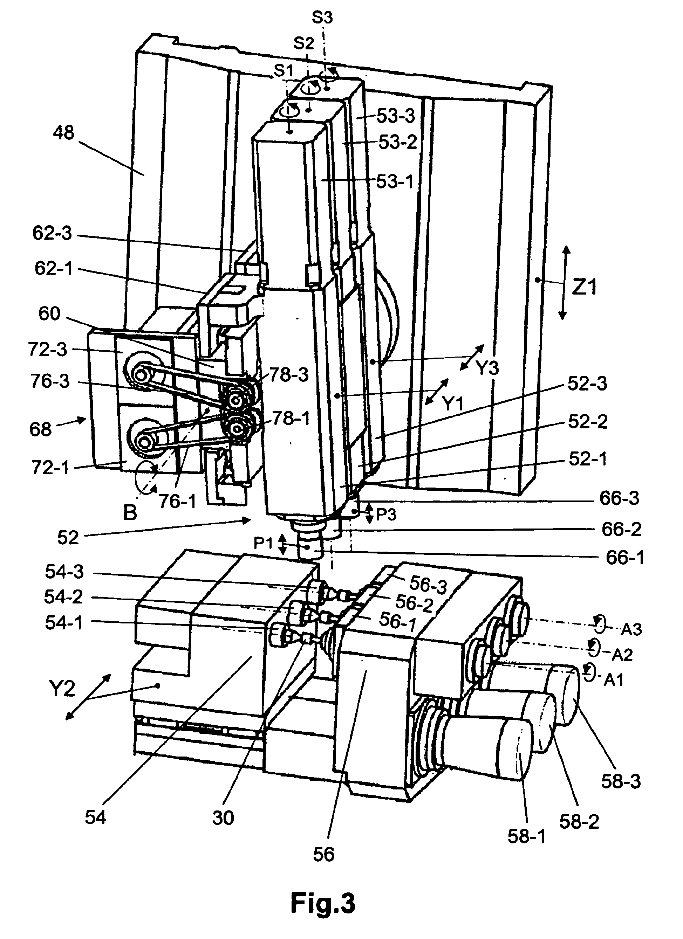

Die in den Fig. 2 und 3 detailliert dargestellte dreispindlige Wälzfräsmaschine 12 umfasst einen verwindungssteifen Maschinenständer 38 und drei feststehende Teile 40, 42, 44 von in den drei in einem rechten Winkel zueinander stehenden Hauptachsenrichtungen X, Y, Z liegenden Linearführungen eines Axialschlittens 46, eines Vertikalschlittens 48 und eines als Radialschlitten ausgestalteten Werkstückspindel- und Reitstocktisches 50.

Der am Maschinenständer 38 festgelegte, feststehende Linearführungsteil 40 liegt in der ersten horizontalen Hauptachsenrichtung X und ermöglicht als Teil einer Axialschlittenführung die Linearverschiebung des Axialschlittens 46 in der ersten horizontalen Hauptachsenrichtung X längs einer horizontalen Verschiebeachse X1.

Der ebenfalls am Maschinenständer 38 festgelegte, feststehende Linearführungsteil 44 liegt in der zweiten horizontalen Hauptachsenrichtung Y und ermöglicht als Teil einer Radialschlittenführung die Linearverschiebung des als Radialschlitten ausgestalteten Werkstückspindel- und Reitstocktisches 50 in der zweiten horizontalen Hauptachsenrichtung Y längs einer horizontalen Verschiebeachse Y2.

Der am Axialschlitten 46 festgelegte, feststehende Linearführungsteil 42 liegt in der vertikalen Hauptachsenrichtung Z und ermöglicht als Teil einer Vertikalschlittenführung die Linearverschiebung des Vertikalschlittens 48 in der vertikalen Hauptachsenrichtung Z längs einer vertikalen Verschiebeachse Z1.

Auf dem Werkstückspindel- und Reitstocktisch 50 ist ein in der ersten horizontalen Hauptachsenrichtung X längs einer horizontalen Verschiebeachse X2 verschiebbarer 3-fach-Reitstock 54 gelagert. Der 3-fach-Reitstock 54 ist mit drei Reitstockeinheiten 54-1, 54-2, 54-3 ausgestattet. Ein entsprechend mit drei Werkstückspindelstockeinheiten 56-1, 56-2, 56-3 ausgestatteter 3-fach-Werkstückspindelstock 56 ist auf dem Werkstückspindel- und Reitstocktisch 50 so festgelegt, dass die drei Werkstückspindelstockeinheiten 56-1, 56-2, 56-3 den drei Reitstockeinheiten 54-1, 54-2, 54-3 gegenüberstehen und drei parallele, in der ersten horizontalen Hauptachsenrichtung X liegende Werkstückspindelachsen A1, A2, A3 bilden.

Wie aus Fig. 3 ersichtlich, ist jede Werkstückspindelstockeinheit 56-1, 56-2, 56-3 über je eine Antriebseinheit 58-1, 58-2, 58-3 einzeln antreibbar. Die zwischen entsprechenden Werkstückspindelstockeinheiten 56-1, 56-2, 56-3 und Reitstockeinheiten 54-1, 54-2, 54-3 eingespannten Werkstücke 30, deren Drehachse in der entsprechenden Werkstückspindelachse A1, A2, A3 liegt, werden von den drei Antriebseinheiten 58-1, 58-2, 58-3 auf eine vorgegebene Rotationsgeschwindigkeit gebracht.

Ein 3-fach-Fräskopf 52 ist um eine in der zweiten horizontalen Hauptachsenrichtung Y liegende Fräskopfschwenkachse B schwenkbar am Vertikalschlitten 48 festgelegt. Der 3-fach-Fräskopf 52 umfasst drei mit je einem eigenen Hauptspindelantrieb 53-1, 53-2, 53-3 ausgestattete Fräskopfeinheiten 52-1, 52-2, 52-3 mit je einem Fräserwerkzeug 66-1, 66-2, 66-3.

Die drei Fräskopfeinheiten 52-1, 52-2, 52-3 bilden zusammen mit den endständig montierten Fräserwerkzeugen 66-1, 66-2, 66-3 drei parallel zueinander in einer gemeinsamen Ebene liegende und rechtwinklig zur Fräskopfschwenkachse B stehende Fräserspindelachsen S1, S2, S3.

Die drei Fräskopfeinheiten 52-1, 52-2, 52-3 sind auf einer gemeinsamen Fräskopfhalterung 60 montiert. Hierbei ist die mittlere Fräskopfeinheit 52-2 fest mit der Fräskopfhalterung 60 verbunden. Die beiden äusseren Fräskopfeinheiten 52-1 und 52-3 sind auf je einem auf der Fräskopfhalterung 60 in der zweiten horizontalen Hauptachsenrichtung Y längs Verschiebeachsen Y1, Y3 verschiebbaren Schlitten 62-1, 62-3 festgelegt.

Eine an der Fräskopfhalterung 60 befestigte Verschiebeeinrichtung 68 zum Verschieben der Schlitten 62-1, 62-3 und damit der auf diesen montierten Fräskopfeinheiten 52-1, 52-3 längs der Verschiebeachsen Y1, Y3 weist zwei Stellantriebe 72-1, 72-3 auf. Die Achsen der Stellantriebe 72-1, 72-3 sind über Zahnriemen 76-1, 76-3 mit an den Schlitten 62-1, 62-3 festliegenden Muttern gepaarten Kugelumlaufspindeln 78-1, 78-3 verbunden.

Der Abstand zwischen benachbarten Werkstückspindelachsen A1-A2 und A2-A3 ist für 3-fach-Spindel und -Reitstöcke im Rahmen üblicher Fertigungstoleranzen im wesentlichen gleich gross und entspricht dem Abstand zwischen benachbarten Fräserspindelachsen S1-S2 und S2-S3. Zur Herstellung hoch präziser Drehteile können sich geringe Abweichungen summieren. Zur Herstellung hochpräziser Fertigteile ist deshalb erforderlich, die Fräserwerkzeuge 66-1, 66-2, 66-3 individuell auf die zwischen den Werkstückspindelstockeinheiten 56-1, 56-2, 56-3 und den Reitstockeinheiten 54-1, 54-2, 54-3 eingespannten Drehteilrohlinge einzustellen.

Die Einstellung eines vorgegebenen seitlichen Abstandes zwischen einander entsprechenden Fräser- und Werkstückspindelachsen erfolgt in der Praxis zunächst am mittleren Fräser- und Werkstückspindelachsenpaar S2-A2 durch Verschiebung des Werkstückspindel- und Reitstocktisches 50 längs der horizontalen Verschiebeachse Y2. Anschliessend werden die beiden äusseren Fräskopfeinheiten 52-1, 52-3 mittels der vorstehend beschriebenen Verschiebeanordnung 68 längs der Verschiebeachsen Y1, Y3 verschoben, bis derselbe vorgegebene seitliche Abstand zwischen den beiden äusseren Fräser- und Werkstückspindelachsenpaaren S1-A1 und S3-A3 erreicht ist.

Eine weitergehende Präzisierung der individuellen Einstellung der Fräserwerkzeuge 66-1, 66-2, 66-3 auf die zwischen den Werkstückspindelstockeinheiten 56-1, 56-2, 56-3 und den Reitstockeinheiten 54-1, 54-2, 54-3 eingespannten Drehteilrohlinge erfolgt durch Verschieben der beiden äusseren Fräserwerkzeuge 66-1, 66-3 in Richtung der Fräserspindelachsen S1, S3 längs axialen Verschiebeachsen P1, P3 über unabhängig von einander einstellbare Pinolen, mit denen die beiden äusseren Fräskopfeinheiten 52-1, 52-3 ausgerüstet sind.

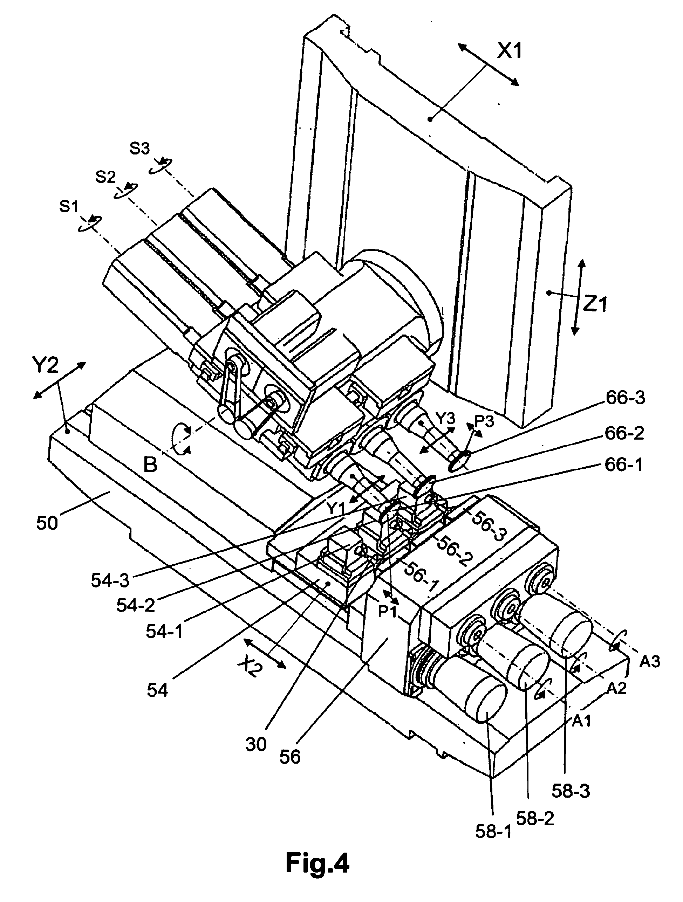

Die Fig. 4 zeigt eine der Anordnung von Fig. 3 entsprechende Anordnung zum gleichzeitigen Fräsen von drei Schnecken an drei Werkstücken in Form von Drehteilen. Die beiden Anordnungen sind bis auf die unterschiedliche Winkellage der Fräserspindelachsen S1, S2, S3 zu den Werkstückspindelachsen A1, A2, A3 baugleich. Gleiche Teile sind daher mit gleichen Bezugszeichen versehen.

Sämtliche lineare Verschiebeachsen X1, X2, Y1, Y2, Y3, Z1 sowie die Rotationsachsen S1, S2, S3, A1, A2, A3 sind vorteilhaft NC-Achsen. Die linearen Verschiebeachsen P1, P3 werden üblicherweise manuell bedient, können aber auch NC-Achsen sein. Der Fräskopf 52 wird üblicherweise manuell geschwenkt, jedoch kann die Fräskopfschwenkachse B ebenfalls eine NC-Achse sein.

### Bezugszeichenliste

- 10: Anlage
- 12: Wälzfräsmaschine
- 14: Bedienungskonsole mit LCD-Farbbildschirm
- 16: Handling-Modul (Portallader)
- 18: Stapel-, Ketten- oder Schienenmagazin
- 20: Vibrator
- 22: Schlauchabgang
- 24: Ausheber
- 26: Umsetzarm mit Umsetzgreifer
- 28: Messstation
- 30: Werkstück
- 32: Ausschleusschublade
- 34: 2x3-fach Greifer
- 36: Laufschiene
- 38: Maschinenständer
- 40: Linearführungsteil
- 42: Linearführungsteil
- 44: Linearführungsteil
- 46: Axialschlitten
- 48: Vertikalschlitten
- 50: Werkstückspindel- und Reitstocktisch (Radialschlitten)
- 52: 3-fach-Fräskopf
- 52-1, -2, -3: Fräskopfeinheiten
- 53-1, -2, -3: Hauptspindelantriebe für 52-1, -2, -3
- 54: 3-fach-Reitstock
- 54-1, -2, -3: Reitstockeinheiten
- 56: 3-fach-Werkstückspindelstock
- 56-1, -2, -3: Werkstückspindelstockeinheiten
- 58-1, -2, -3: Antriebseinheiten für 56-1, -2, -3

- 60: Fräskopfhalterung
- 62-1, -3: Schlitten
- 66-1, -2, -3: Fräserwerkzeuge
- 68: Verschiebeeinrichtung für 62-1, -3
- 70: Abdeckung für 68
- 72-1, -3: Stellantriebe
- 76-1, -3: Zahnriemen
- 78-1, -3: Kugelumlaufspindeln

- X1, 2: horizontale Verschiebeachsen in X-Richtung
- Y1, 2, 3: horizontale Verschiebeachsen in Y-Richtung
- Z1: vertikale Verschiebeachse in Z-Richtung
- P1, 3: axiale Verschiebeachse in Richtung S1, 3

- A1, 2, 3: Werkstückspindelachsen
- S1, 2, 3: Fräserspindelachsen
- B: Fräskopfschwenkachse

## Patentansprüche

1. Fräsmaschine für die spanabhebende Umfangbearbeitung von drei Werkstücken gleichzeitig, mit einem 3-fach-Fräskopf (52) mit drei parallel zueinander stehenden Fräserspindelachsen (S1, S2, S3), einem 3-fach-Reitstock (54) und einem 3-fach-Werkstückspindelstock (56) mit drei in einer ersten horizontalen Hauptachsenrichtung (X) parallel zueinander stehenden Werkstückspindelachsen (A1, A2, A3),
**dadurch gekennzeichnet, dass**
der 3-fach-Reitstock (54) und der 3-fach-Werkstückspindelstock (56) auf einem in einer zweiten horizontalen Hauptachsenrichtung (Y) rechtwinklig zur ersten horizontalen Hauptachsenrichtung (X) längs einer horizontalen Verschiebeachse (Y2) verschiebbaren, als Radialschlitten ausgestalteten Werkstückspindel- und Reitstocktisch (50) angeordnet sind und der 3-fach-Fräskopf (52) drei Fräskopfeinheiten (52-1, 52-2, 52-3) aufweist, wobei zwei Fräskopfeinheiten (52-1, 52-3) relativ zur dritten Fräskopfeinheit (52-2) in der zweiten horizontalen Hauptachsenrichtung (Y) längs horizontalen Verschiebeachsen (Y1, Y3) verschiebbar sind.

2. Fräsmaschine nach Anspruch 1, **dadurch gekennzeichnet, dass** an den drei Fräskopfeinheiten (52-1, 52-2, 52-3) Fräserwerkzeuge (66-1, 66-2, 66-3) montiert sind, wobei zwei Fräserwerkzeuge (66-1, 66-3) relativ zum dritten, vorzugsweise mittleren, Fräserwerkzeug (66-2) in Richtung der Fräserspindelachsen (S1, S3) längs axialen Verschiebeachsen (P1, P3) verschiebbar sind.

3. Fräsmaschine nach Anspruch 1 oder 2, **dadurch gekennzeichnet, dass** die drei Fräskopfeinheiten (52-1, 52-2, 52-3) auf einer gemeinsamen Fräskopfhalterung (60) montiert sind, wobei eine der Fräskopfeinheiten, vorzugsweise die mittlere Fräskopfeinheit (52-2), fest mit der Fräskopfhalterung 60 verbunden ist.

4. Fräsmaschine nach Anspruch 3, **dadurch gekennzeichnet, dass** zwei Fräskopfeinheiten, vorzugsweise die beiden äusseren Fräskopfeinheiten (52-1, 52-3), auf je einem auf der Fräskopfhalterung (60) längs der horizontalen Verschiebeachsen (Y1, Y3) verschiebbaren Schlitten (62-1, 62,3) festgelegt sind.

5. Fräsmaschine nach Anspruch 4, **dadurch gekennzeichnet, dass** eine an der Fräskopfhalterung (60) befestigte Verschiebeeinrichtung (68) zum Verschieben der Schlitten (62-1, 62-3) zwei Stellantriebe (72-1, 72-3) aufweist.

6. Fräsmaschine nach Anspruch 5, **dadurch gekennzeichnet, dass** die Stellantriebe (72-1, 72-3) über Zahnriemen (76-1, 76-3) mit an den Schlitten (62-1, 62-3) festliegenden Kugelumlaufspindeln 78-1, 78-3 wirkverbunden sind.

7. Fräsmaschine nach einem der Ansprüche 1 bis 6, **dadurch gekennzeichnet, dass** die drei Fräskopfeinheiten (52-1, 52-2, 52-3) mit je einem Hauptspindelantrieb (53-1, 53-2, 53-3) ausgestattet sind.

8. Fräsmaschine nach einem der Ansprüche 1 bis 7, **dadurch gekennzeichnet, dass** der 3-fach-Fräskopf (52) mit den drei Fräskopfeinheiten (52-1, 52-2, 52-3) um eine in der zweiten horizontalen Hauptachsenrichtung (Y) liegende Fräskopfschwenkachse (B) schwenkbar an einem in einer vertikalen Hauptachsenrichtung (Z) längs einer vertikalen Verschiebeachse (Z1) verschiebbaren Vertikalschlitten (48) festgelegt ist.

## Claims

1. Milling machine for the circumferential machining of three workpieces simultaneously, comprising a triple milling head (52) with three milling cutter spindle axes (S1, S2, S3) parallel to one another, a triple tailstock (54) and a triple workpiece spindle head (56) with three workpiece spindle axes (A1, A2, A3) parallel to one another in a first horizontal main axial direction (X),
**characterized in that**
the triple tailstock (54) and the triple workpiece spindle head (56) are arranged on a workpiece spindle and tailstock table (50), which is designed as a radial slide and is displaceable at right angles to the first horizontal main axial direction (X) along a horizontal displacement axis (Y2) in a second horizontal main axial direction (Y), and the triple milling head (52) has three milling head units (52-1, 52-2, 52-3), two milling head units (52-1, 52-3) being displaceable in relation to the third milling head unit (52-2) in the second horizontal main axial direction (Y) along horizontal displacement axes (Y1, Y3).

2. Milling machine according to Claim 1, **characterized in that** milling cutter tools (66-1, 66-2, 66-3) are mounted on the three milling head units (52-1, 52-2, 52-3), two milling cutter tools (66-1, 66-3) being displaceable in relation to the third, preferably middle, milling cutter tool (66-2) in the direction of the milling cutter spindle axes (S1, S3) along axial displacement axes (P1, P3).

3. Milling machine according to Claim 1 or 2, **characterized in that** the three milling head units (52-1, 52-2, 52-3) are mounted on a common milling head mount (60), one of the milling head units, preferably the middle milling head unit (52-2), being fixedly connected to the milling head mount (60).

4. Milling machine according to Claim 3, **characterized in that** two milling head units, preferably the two outer milling head units (52-1, 52-3), are each fixed on a respective slide (62-1, 62-3) that is displaceable on the milling head mount (60) along the horizontal displacement axes (Y1, Y3).

5. Milling machine according to Claim 4, **characterized in that** a displacement device (66), fastened to the milling head mount (60), has two actuating drives (72-1, 72-3) for the displacement of the slides (62-1, 62-3).

6. Milling machine according to Claim 5, **characterized in that** the actuating drives (72-1, 72-3) are operatively connected by means of toothed belts (76-1, 76-3) to recirculating ball screws (78-1, 78-3) fixed on the slides (62-1, 62-3).

7. Milling machine according to one of Claims 1 to 6, **characterized in that** the three milling head units (52-1, 52-2, 52-3) are each equipped with a main spindle drive (53-1, 53-2, 53-3).

8. Milling machine according to one of Claims 1 to 7, **characterized in that** the triple milling head (52) with the three milling head units (52-1, 52-2, 52-3) is fixed pivotably about a milling head pivot axis (B), lying in the second horizontal main axial direction (Y), on a vertical slide (48) that is displaceable in a vertical main axial direction (Z) along a vertical displacement axis (Z1).

## Revendications

1. Fraiseuse pour l'usinage périphérique par enlèvement de copeaux de trois pièces simultanément, comprenant une tête de fraisage triple (52) avec trois axes de broches de fraiseuse parallèles les uns aux autres (S1, S2, S3), une poupée mobile triple (54) et une poupée de broche porte-pièce triple (56) avec trois axes de broche porte-pièce (A1, A2, A3) parallèles les uns aux autres dans une première direction d'axe principale horizontale (X),
**caractérisée en ce que**
la poupée mobile triple (54) et la poupée de broche porte-pièce triple (56) sont disposées sur une table de broche porte-pièce et de poupée mobile (50) configurée sous forme de chariot radial, déplaçable dans une deuxième direction d'axe principale horizontale (Y) perpendiculairement à la première direction d'axe principale horizontale (X) le long d'un axe de déplacement horizontal (Y2), et la tête de fraisage triple (52) présente trois unités de tête de fraisage (52-1, 52-2, 52-3), deux unités de tête de fraisage (52-1, 52-3) pouvant être déplacées par rapport à la troisième unité de tête de fraisage (52-2) dans la deuxième direction d'axe principale horizontale (Y) le long d'axes de déplacement horizontaux (Y1, Y3).

2. Fraiseuse selon la revendication 1, **caractérisée en ce que** des outils de fraisage (66-1, 66-2, 66-3) sont montés sur les trois unités de tête de fraisage (52-1, 52-2, 52-3), deux outils de fraisage (66-1, 66-3) pouvant être déplacés par rapport au troisième outil de fraisage (66-2), de préférence central, dans la direction des axes de broches de fraiseuse (S1, S3) le long d'axes de déplacement axiaux (P1, P3).

3. Fraiseuse selon la revendication 1 ou 2, **caractérisée en ce que** les trois unités de tête de fraisage (52-1, 52-2, 52-3) sont montées sur un support de têtes de fraisage commun (60), l'une des unités de tête de fraisage, de préférence l'unité de tête de fraisage centrale (52-2), étant connectée fixement au support de têtes de fraisage commun (60).

4. Fraiseuse selon la revendication 3, **caractérisée en ce que** deux unités de tête de fraisage, de préférence les deux unités de tête de fraisage extérieures (52-1, 52-3), sont fixées respectivement sur un chariot (62-1, 62-3) déplaçable sur le support de têtes de fraisage (60) le long des axes de déplacement horizontaux (Y1, Y3).

5. Fraiseuse selon la revendication 4, **caractérisée en ce qu'**un dispositif de déplacement (68) fixé sur le support de têtes de fraisage (60) présente deux entraînements de réglage (72-1, 72-3) pour le déplacement des chariots (62-1, 62-3).

6. Fraiseuse selon la revendication 5, **caractérisée en ce que** les entraînements de réglage (72-1, 72-3) sont connectés fonctionnellement à des broches à recirculation de billes (78-1, 78-3) fixées sur les chariots (62-1, 62-3) par le biais de courroies dentées (76-1, 76-3).

7. Fraiseuse selon l'une quelconque des revendications 1 à 6, **caractérisée en ce que** les trois unités de tête de fraisage (52-1, 52-2, 52-3) sont munies chacune d'un entraînements de broche principal (53-1, 53-2, 53-3).

8. Fraiseuse selon l'une quelconque des revendications 1 à 7, **caractérisée en ce que** la tête de fraisage triple (52) avec les trois unités de tête de fraisage (52-1, 52-2, 52-3) est fixée de manière à pouvoir pivoter autour d'un axe de pivotement de tête de fraisage (B) situé dans la deuxième direction d'axe principale horizontale (Y) sur un chariot vertical (48) déplaçable dans une direction d'axe principale verticale (Z) le long d'un axe de déplacement vertical (Z1).
